# EUROPEAN PATENT SPECIFICATION

(11) **EP 2 428 694 B1**
(45) Date of publication and mention of the grant of the patent: **14.05.2014**
(21) Application number: 11176002.1
(22) Date of filing: 29.07.2011
(51) Int. Cl.: F16D 13/58

(54) **Clutch cover assembly**
Kupplungsdeckelanordnung
Ensemble formant couvercle d'embrayage

(30) Priority: 14.09.2010 JP 2010205221
(43) Date of publication of application: 14.03.2012
(73) Proprietor: AISIN SEIKI KABUSHIKI KAISHA, Kariya-shi, Aichi 448-8650 (JP)
(72) Inventor: Kida, Tokiyoshi, Kariya-shi, Aichi 448-8650 (JP); Hayashi, Daisuke, Kariya-shi, Aichi 448-8650 (JP)
(74) Representative: Kramer - Barske - Schmidtchen

(56) References cited:
- EP-A2- 0 114 098
- GB-A- 1 443 367
- US-A- 4 210 233

## Description

### TECHNICAL FIELD

This disclosure generally relates to a clutch cover assembly.

### BACKGROUND DISCUSSION

A vehicle is equipped with a clutch device on a power transfer path in between an engine and a transmission for a purpose of cutting off the rotational power from an engine to a transmission on situations for example at the engine start or when changing gears. The clutch device realizes a power transfer and a power disconnection between the engine and the transmission by manual operations (using a hand, a foot, or means alike) of operation mechanisms for example clutch lever or clutch pedal which transfer a clutch operational force by means of hydraulic mechanisms, link mechanisms or similar. The clutch device, equipped with a clutch disc in between a flywheel and a clutch pressure plate, transfers the power from the engine to the transmission by pressing the clutch pressure plate to the clutch disc, and disconnects the power by releasing pressure on the clutch disc by separating the clutch pressure plate from the clutch disc. As a mechanism to press the clutch pressure plate to the clutch disc and to release the clutch pressure plate from the clutch disc, the clutch device includes a clutch cover assembly within which pivotally supports a diaphragm spring. The clutch cover assembly, which rotates together with the flywheel as one unit, is structured so that an elastic force of the diaphragm spring enables pressing of the clutch pressure plate to the flywheel related members.

A known clutch cover assembly disclosed in JPH6-33948A includes two pivot rings sandwiching a diaphragm spring at multiple bent portions appropriately positioned circumferentially on a clutch cover. In the above mentioned clutch cover assembly, the diaphragm spring functions as a lever, and the pivot rings function as fulcrums and as members for receiving a reaction force generated by a load at a frictional face. This clutch cover assembly retains the pivot rings and the diaphragm spring, which is sandwiched between the pivot rings from its both sides in axial direction, by clinching bending portions (or tabs) extended from the clutch cover around the pivot rings.

An arrangement of structural members disclosed by the known clutch cover assembly results in a clutch cover being dimensionally large in an axial direction at the fulcrum portions of the diaphragm spring because the known clutch cover serially arranges the structural members in axial direction in an order of the clutch cover, one of the pivot rings, the diaphragm spring, another pivot ring, and the clinched tab.

The known clutch cover assembly results in the clutch cover being dimensionally large in the axial direction, also because the diaphragm spring is not the closest member to the engine (i.e., to the clutch pressure plate) at the fulcrum portions of the diaphragm spring. In other words, the known clutch cover assembly results in the clutch cover being dimensionally large in the axial direction because another pivot ring and the clinched tab are positioned at a closer position to the engine in relation to the diaphragm spring (i.e., to the clutch pressure plate) at the fulcrum portions of the diaphragm spring.

The known clutch cover assembly also results in a cost increase due to having a large number of components by including two pivot rings sandwiching the diaphragm spring at the fulcrum portion of the diaphragm spring.

EP 0114098 A2 discloses a similar clutch cover assembly with the diaphragm spring held and sandwiched between two fulcrum rings. The fulcrum rings are located in position with respect to the cover by bent-over tabs which constitute an integral part of the cover. The diaphragm spring is provided with raised ribs at route portions of radially inwardly extending fingers of the diaphragm spring. The ribs are accommodated in raised bridge portions of one of the fulcrum rings so that the position of the diaphragm spring in relation to a clutch cover is defined by the ribs accommodated in the bridge portions.

A need thus exits for a clutch cover assembly that reduces cost and the dimension in an axial direction simultaneously.

A solution of this need is achieved with a clutch cover assembly according to claim 1 and a clutch cover assembly according to claim 4.

The sub claims are directed towards advantageous embodiments of the inventive clutch cover assembly.

According to an aspect of this disclosure a clutch cover assembly comprises a a ring shaped pivot ring; a clutch cover including an annular flange portion and a plurality of tab portions that extend from an inner periphery of the flange portion for retaining the pivot ring at the tab portions; and a diaphragm spring including an annularly formed annular portion, a plurality of lever portions extending inwardly in radial direction from an inner periphery of the annular portion at positions located between the tab portions, and projections, each projection engaging to the pivot ring for pivoting each lever portion at a fulcrum portion on each lever portion, wherein each of the projections extends from each lever portion outwardly in a radial direction at a location that does not conflict with each of the tab portions; and the pivot ring is axially positioned in between each of the fulcrum portion and each of the projections.

The clutch cover assembly according to the first embodiment includes one pivot ring for reducing a dimension in axial direction and reducing a cost by including a small number of components. Positioning each projection at a position that does not conflict with each tab portion results in positioning each clinching portion on each tab portion and the annular portion of the diaphragm spring next to each other on an axially perpendicular plane, which results in a clutch cover assembly being dimensionally small in the axial direction at the fulcrum portions of the diaphragm spring.

According to a further aspect of the clutch cover assembly disclosed here, the fulcrum portions are bent stepwise, and the pivot ring is positioned at an outer side in the radial direction of the step of the fulcrum portions.

The step form at the fulcrum portions is structurally effective for positioning the annular portion of the diaphragm spring at the clutch pressure plate side of the pivot ring, which results in a clutch cover assembly being dimensionally small in the axial direction at the fulcrum portions of the diaphragm spring.

According to another aspect of the clutch cover assembly disclosed here, each lever portion includes two projections, and each of the two projections on each lever portion extends outward in the radial direction at circumferentially off location to both sides from the fulcrum portion on each lever portion.

Extending two projections outward in a radial direction at circumferentially off location to both sides from the fulcrum portion on each lever portion, and positioning each projection at a position that does not conflict with each tab portion, result in positioning clinching portions on the tab portions and the annular portion of the diaphragm spring next to each other on an axially perpendicular plane, which results in a clutch cover assembly being dimensionally small in the axial direction at the fulcrum portions of the diaphragm spring.

According to a further aspect of this disclosure, a clutch cover assembly comprises a ring shaped pivot ring; a clutch cover including an annular flange portion and a plurality of tab portions that extend from an inner periphery of the flange portion for retaining the pivot ring at the tab portions; and a diaphragm spring including an annularly formed annular portion, a plurality of lever portions extending inwardly in radial direction from an inner periphery of the annular portion at positions located between the tab portions, and projections, each projection engaging to the pivot ring for pivoting each lever portion at a fulcrum portion on each lever portion, wherein each projection extends inwardly in a radial direction from an inner circumference edge of the annular portion between the lever portions at a location that does not conflict with each tab portion; and the pivot ring is axially positioned in between each fulcrum portion and each projection.

The clutch cover assembly according to the last mentioned aspect also includes only one pivot ring for reducing a dimension in axial direction and reducing a cost by including a small number of components. Extending each projection inward in a radial direction from the inner circumference edge of the annular portion between the lever portions and positioning each projection at a position that does not conflict with each tab portion are effective in positioning each clinching portion on each tab portion and the annular portion of the diaphragm spring next to each other on an axially perpendicular plane, which results in a clutch cover assembly being dimensionally small in the axial direction at the fulcrum portions of the diaphragm spring.

According to another aspect of the clutch cover assembly disclosed here, the fulcrum portions are bent stepwise, and the pivot ring is positioned at an inner side in the radial direction of the level difference of the fulcrum portions.

The step form at the fulcrum portions is structurally effective for positioning the annular portion of the diaphragm spring at the clutch pressure plate side of the pivot ring, which results in a clutch cover assembly being dimensionally small in the axial direction at the fulcrum portions of the diaphragm spring.

According to a further aspect of the clutch cover assembly disclosed here, projections are at positions that overlap with the tab portions when viewed in the axial direction, and each clinching portion on each tab portion is at circumferentially off location at a position that does not conflict with each projection, when clinched.

Positioning projections at a position that overlap with the tab portion when viewed in the axial direction and positioning each clinching portion, when clinched, at circumferentially off location that does not conflict with projections results in positioning each clinching portion on each tab portion and the annular portion of the diaphragm spring next to each other on an axially perpendicular plane, which results in a clutch cover assembly being dimensionally small in the axial direction at the fulcrum portions of the diaphragm spring.

According to another aspect of the clutch cover assembly disclosed here, each clinching portion extends toward the opposite direction to the direction the circumferentially positioned projections.

Positioning each clinching portion to extend toward the opposite direction to the direction the circumferentially positioned projections extends to, enables the positioning of each clinching portion on each tab portion and the annular portion of the diaphragm spring next to each other on an axially perpendicular plane, which results in a clutch cover assembly dimensionally small in the axial direction at the fulcrum portions of the diaphragm spring.

According to another aspect of the clutch cover assembly disclosed here, the diaphragm spring biases a clutch pressure plate at a point of action on the annular portion of the diaphragm spring in the direction for detaching the clutch pressure plate from the clutch cover, and the annular portion is positioned at the clutch pressure plate side of the pivot ring.

Positioning the annular portion of the diaphragm spring at the clutch pressure plate side of the pivot ring results in a clutch cover assembly dimensionally small in the axial direction at the fulcrum portions of the diaphragm spring.

According to a further aspect of the clutch cover assembly disclosed here, each tab portion includes at least one clinching portion bent at a middle portion of the clinching portion to an axial direction toward the clutch pressure plate and bent at an end portion of the clinching portion to outwardly in a radial direction, each clinching portion, when clinched, retains the pivot ring at each tab portion, and each clinching portion and the annular portion are positioned next to each other on an axially perpendicular plane that is at the clutch pressure plate side of the pivot ring.

Positioning each clinching portion on each tab portion and the annular portion of the diaphragm spring next to each other on an axially perpendicular plane results in a clutch cover assembly dimensionally small in the axial direction at the fulcrum portions of the diaphragm spring.

### BRIEF DESCRIPTION OF THE DRAWINGS

The foregoing and additional features and characteristics of this disclosure will become more apparent from the following detailed description considered with reference to the accompanying drawings, wherein:
Fig. 1 is a plan view of a typical configuration of a clutch cover assembly according to a first embodiment disclosed here viewed from an axial direction.
Fig. 2 is a cross-sectional view taken along line II-II in Fig. 1 for the typical configuration of the clutch cover assembly according to the first embodiment disclosed here.
Fig. 3 is a plan view of a clutch cover for the typical configuration of the clutch cover assembly according to the first embodiment disclosed here viewed from an arrow Y indicated in Fig. 2.
Fig. 4 is a plan view of a diaphragm spring for the typical configuration of the clutch cover assembly according to the first embodiment disclosed here viewed from the arrow Y indicated in Fig. 2.
Fig. 5 is a plan view of a typical configuration of a clutch cover assembly according to a second embodiment disclosed here viewed from an axial direction.
Fig. 6 is a cross-sectional view taken along line XI-XI in Fig. 5 for the typical configuration of the clutch cover assembly according to the second embodiment disclosed here.
Fig. 7 is a plan view of a clutch cover for the typical configuration of the clutch cover assembly according to the second embodiment disclosed here viewed from an arrow Y indicated in Fig. 6.
Fig. 8 is a plan of a diaphragm spring for the typical configuration of the clutch cover assembly according to the second embodiment disclosed here viewed from the arrow Y indicated in Fig. 6.

### DETAILED DESCRIPTION

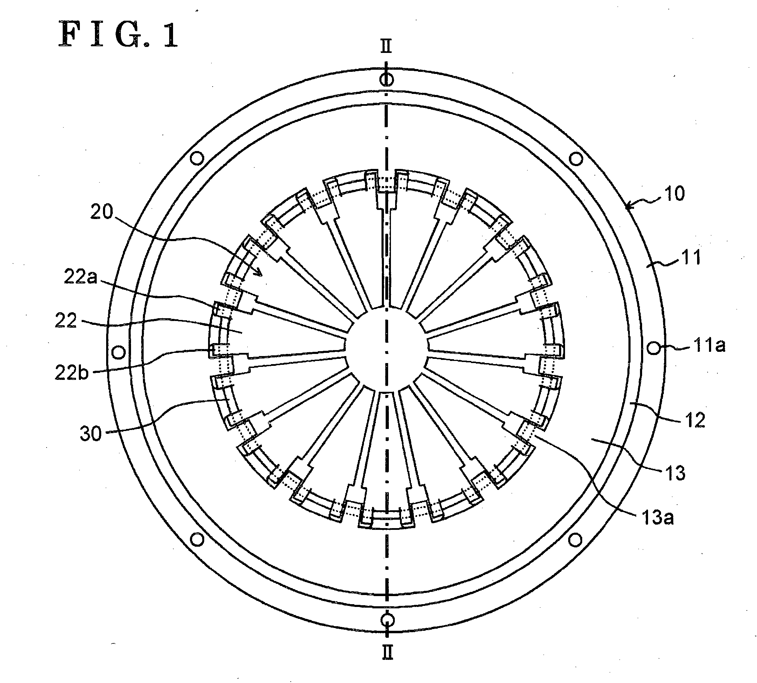

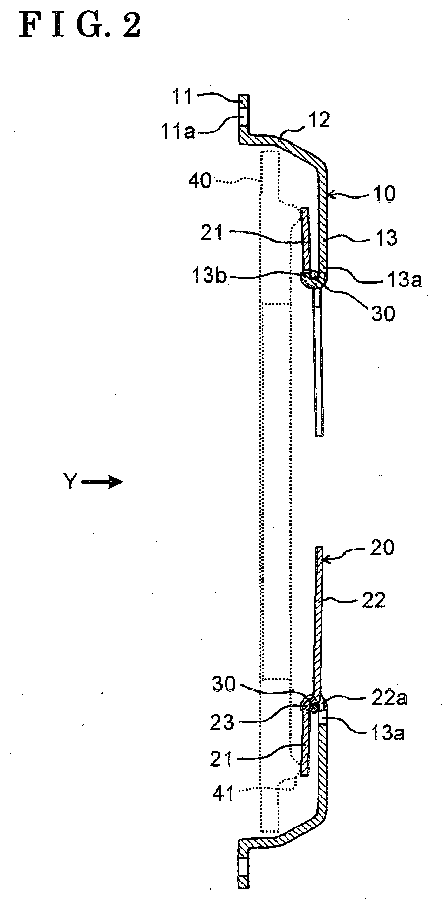

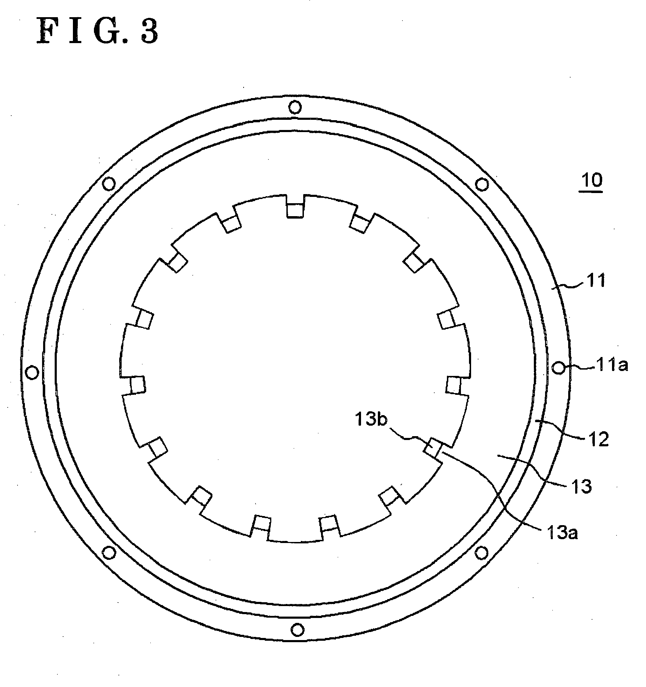

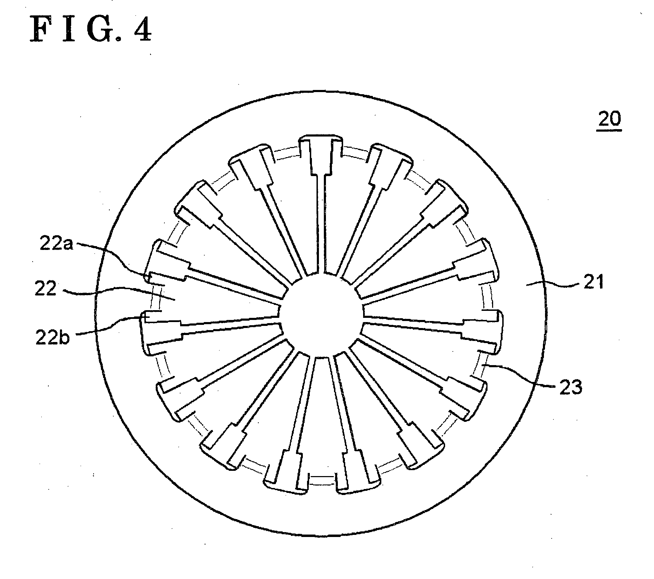

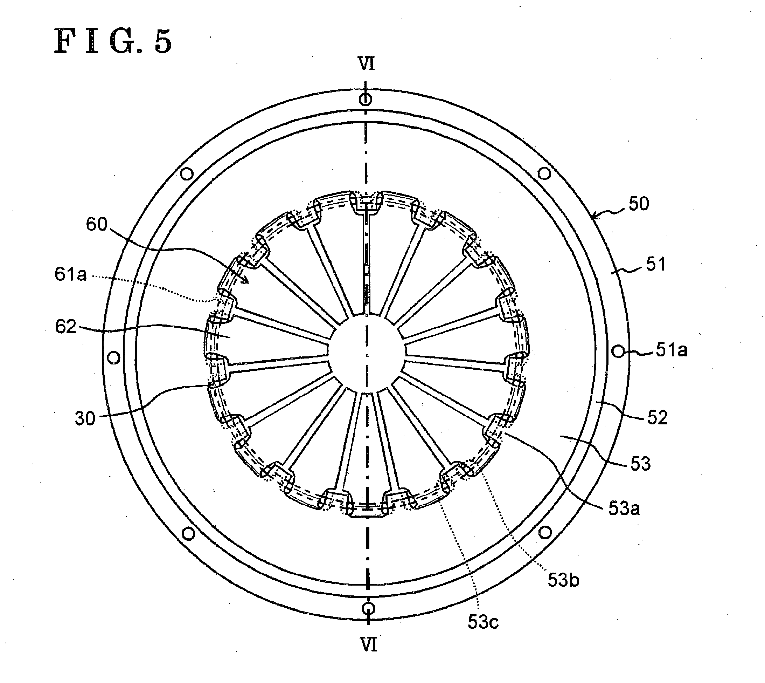

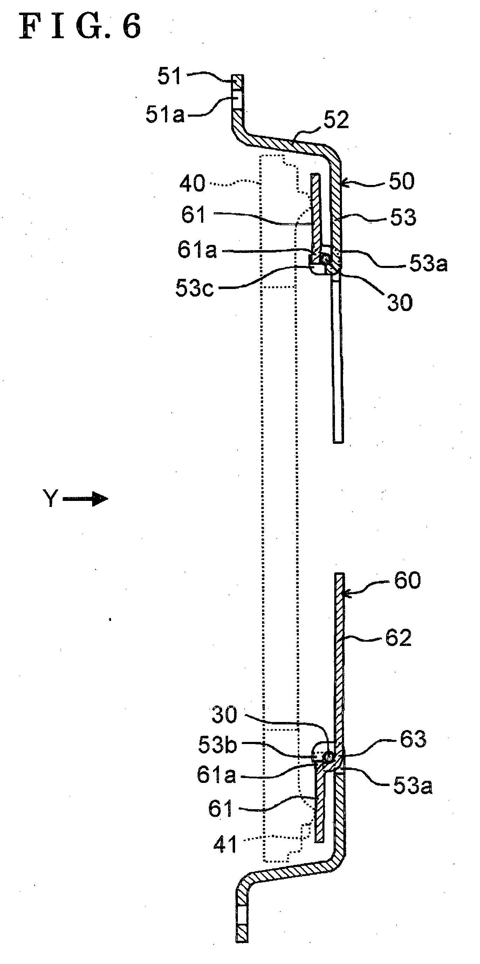

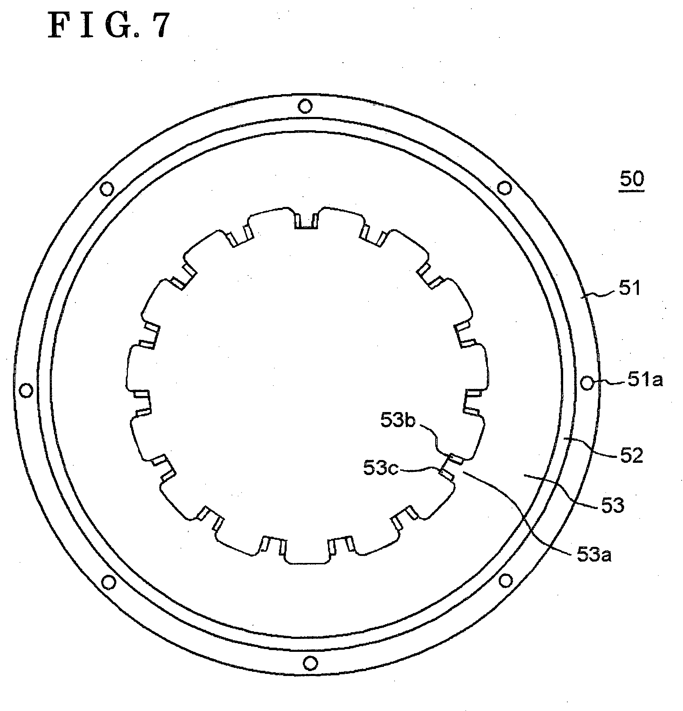

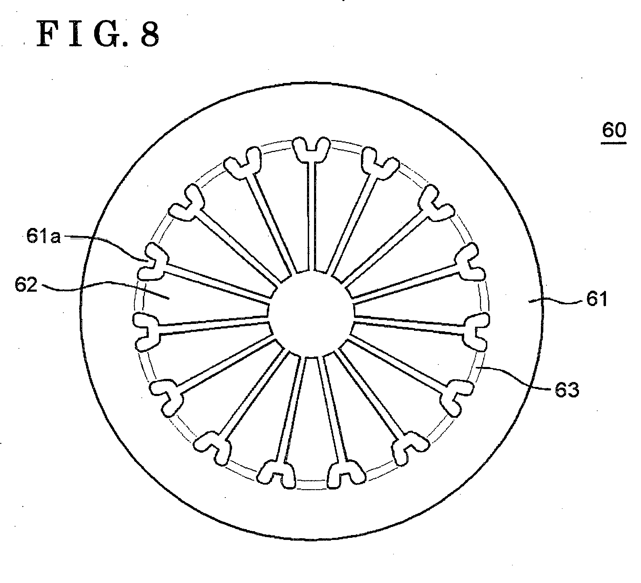

Embodiments of a clutch cover assembly will be explained with reference to illustrations of drawing figures as follows. A clutch cover assembly according to an embodiment disclosed here includes a pivot ring 30 (inclusive of substantially ring shaped and C-ring shaped) (in Fig. 1, Fig. 2, Fig. 5 and Fig. 6), a clutch cover 10 (in Fig. 1, Fig. 2 and Fig. 3 and 50 in Fig. 5, Fig. 6 and Fig. 7), which includes an annular flange portion 13 (in Fig. 1, Fig. 2 and Fig. 3 and 53 in Fig. 5, Fig. 6 and Fig. 7) and multiple tab portions 13a (in Fig. 1, Fig. 2 and Fig. 3 and 53a in Fig. 5, Fig. 6 and Fig. 7) that extend from an inner periphery of the flange portion 13 (in Fig. 1, Fig. 2 and Fig. 3 and 53 in Fig. 5, Fig. 6 and Fig. 7) for retaining the pivot ring 30 (in Fig. 1, Fig. 2, Fig. 5 and Fig. 6) at the tab portions 13a (in Fig. 1, Fig. 2 and Fig. 3 and 53a in Fig. 5, Fig. 6 and Fig. 7), and a diaphragm spring 20 (in Fig. 1, Fig. 2 and Fig. 4 and 60 in Fig. 5, Fig. 6, and Fig. 8), which includes an annularly formed annular portion 21 (in Fig. 2 and Fig. 4 and 61 in Fig. 6 and Fig. 8), multiple lever portions 22 (in Fig. 1, Fig. 2 and Fig. 4 and 62 in Fig. 5, Fig. 6 and Fig. 8) extending from an inner periphery of the annular portion 21 (in Fig. 2 and Fig. 4 and 61 in Fig. 6 and Fig. 8) to an inward in a radial direction at positions in between the tab portions 13a (in Fig. 1, Fig. 2 and Fig. 3 and 53a in Fig. 5, Fig. 6 and Fig. 7), and projections 22a (and 22b in Fig. 1, Fig. 2 and Fig. 4 and 61a in Fig. 5, Fig. 6, and Fig. 8) that engage with the pivot ring 30 (in Fig. 1, Fig. 2, Fig. 5 and Fig. 6), for enabling each lever portion 22 (in Fig. 1, Fig. 2 and Fig. 4 and 62 in Fig. 5, Fig. 6 and Fig. 8) to pivot at a fulcrum portion 23 (in Fig. 2 and Fig. 4 and 63 in Fig. 6 and Fig. 8) on each lever portion 22 (in Fig. 1, Fig. 2 and Fig. 4 and 62 in Fig. 5, Fig. 6 and Fig. 8).

Referencing to a particular figure or figures is merely to enhance understanding of the embodiments and is not to be construed as limited to the particular embodiments disclosed in that particular figure being referenced to.

The clutch cover assembly according to a first embodiment is explained referring to Figs. 1 to 4.

The clutch cover assembly is an assembly in which the diaphragm spring 20 is pivotally supported by the clutch cover 10. The clutch cover assembly transfers a power from an engine to a transmission by pressing a clutch pressure plate 40 to the clutch disc, and disconnects the power by releasing a pressure on the clutch disc by separating the clutch disc from the clutch pressure plate 40. The clutch cover assembly includes the clutch cover 10, the diaphragm spring 20 and the pivot ring 30 as its components.

The clutch cover 10 is an annular member. The clutch cover 10 includes a cylinder portion 12 and an annular outer flange portion 11 that extend outward in a radial direction from one end of the cylinder portion 12, and the annular inner flange portion 13 that extends inward in a radial direction from the other end of the cylinder portion 12. The outer flange portion 11 includes multiple through hole portions 11a for a purpose of retaining the clutch cover 10 to a flywheel by fixing the clutch cover 10 and the flywheel together at a predetermined position by rivets, bolts or similar fixing means. The inner flange portion 13 includes multiple tab portions 13a extending from predetermined positions of an inner periphery of the inner flange portion 13.

The tab portions 13a retain the pivot ring 30, which pivotally support the diaphragm spring 20, to the clutch cover 10. Each tab portion 13a, when viewed in an axial direction, is at a position that overlaps within a gap area between the lever portions 22 on the diaphragm spring 20. In other words, each tab portion 13a is located at a circumferentially off location from the projections 22a or 22b on the diaphragm spring 20 where each clinching portions 13b on each tab portion 13a, when clinched, does not conflict with the projections 22a or 22b on the diaphragm spring 20. Each tab portion 13a is bent at its midway portion to an axial direction toward the clutch pressure plate 40 (in Fig. 2), and is bent at its end portion outwardly in a radial direction. Each midway portion of the tab portion 13a, which is bent to an axial direction toward the clutch pressure plate 40, is positioned at an inner periphery side of the pivot ring 30 thus restraining the radial direction movement of the pivot ring 30. Each end portion of the tab portion 13a bent to head outward in a radial direction becomes the clinching portion 13b. Each clinching portion 13b bent around the pivot ring 30 restrains the axial direction movement of the pivot ring 30 by pressing the pivot ring 30 toward a root portion of each tab portion 13a.

The diaphragm spring 20 is an annular elastic member that functions as a lever to provide pressure to the clutch pressure plate 40 (in Fig. 2) to make connection for the flywheel (i.e., to provide pressure toward left in Fig. 2). The diaphragm spring 20 includes multiple lever portions 22 extending inwardly in a radial direction from an inner periphery of the annular portion 21. The annular portion 21 is an annular member that functions as a coned disc spring. The annular portion 21 is slanted so that its outer periphery portion is positioned closer to the clutch pressure plate 40 (in Fig. 2) in relation to its inner periphery portion (i.e., the outer periphery portion of the annular portion 21 is positioned more to the left of its inner periphery portion in Fig. 2). The outer periphery portion of the annular portion 21 is in close contact (pressure contact) with projecting portions 41 (in Fig. 2), which are formed on the clutch pressure plate 40 (in Fig. 2), to become points of action for the diaphragm spring 20. The annular portion 21 is positioned at the clutch pressure plate 40 side (in Fig. 2) of the pivot ring 30 (i.e., the annular portion 21 is positioned leftward of the pivot ring 30 in Fig. 2). The annular portion 21 and the clinching portions 13b of the tab portions 13a are positioned next to each other on an axially perpendicular plane. As a configuration example, the annular portion 21 is positioned at the transmission side of the pivot ring 30 (i.e., a location of the annular portion 21 is rightward of the pivot ring 30 in Fig. 2). Each lever portion 22 positioned circumferentially next to each other on the diaphragm spring 20 is separated from each other. Each lever portion 22 includes the fulcrum portion 23 at its root portion that serves as a fulcrum for the diaphragm spring 20. The fulcrum portion 23 is bent stepwise between the annular portion 21 and the lever portions 22. The pivot ring 30 is positioned at an outer side in radial direction of the level difference at the fulcrum portions 22. Each lever portion 22 includes two of the projections 22a and 22b extending outward in a radial direction at circumferentially off location from the fulcrum portion 23 to both sides of the fulcrum portion 23 on each lever portion 22. Each of the two projections 22a and 22b engages with the pivot ring 30 for restraining the axial direction shifting of the pivot ring 30 at each fulcrum portion 23. The diaphragm spring 20 pivots at the fulcrum portion 23, being supported by the pivot ring 30 at the fulcrum portions 23 and the projections 22a and 22b. Transmission side faces of the lever portions at inner periphery portions 22 (i.e., facing to the right in Fig. 2) are in close contact with a clutch releasing mechanism that is movable in an axial direction (for example, a clutch release bearing). The portion where the lever portions 22 and the clutch releasing mechanism contact becomes the point of effort for the diaphragm spring 20. By pressing the point of effort on the lever portions 22 toward the clutch pressure plate 40 (in Fig. 2) (i.e., toward left in Fig. 2), the diaphragm spring 20 pivots at the fulcrum portions 23 and moves the clutch pressure plate 40 in a direction to be removed from the point of action on the annular portion 21.

The pivot ring 30 is a ring shaped (inclusive of substantially ring shaped and C-ring shaped) member. A cross section of the pivot ring 30 is a circle. The pivot ring 30 is restrained to the diaphragm spring 20 by clinching the clinching portions 13b on the multiple tab portions 13a formed on the clutch cover 10 at gap areas between the lever portions 22. The pivot ring 30 pivotally supports the diaphragm spring 20 at the fulcrum portions 23 on the diaphragm spring 20.

The clutch pressure plate 40 is an annular member that presses the clutch disc to the flywheel. The clutch pressure plate 40 includes the projecting portions 41 projecting in an axial direction toward the diaphragm spring 40. Vertices of the projecting portions 41 are in close contact (pressure contact) with points of effort on the annular portion 21 of the diaphragm spring 20. The clutch pressure plate 40 is connected to the flywheel by means of a strap plate (a plate spring), and is allowed to shift its position in an axial direction in response to a deflection of the strap plate.

An example of assembling the clutch cover assembly according to the first embodiment is that after placing the pivot ring 30 on the diaphragm spring 20 in between the fulcrum portion 23 and the projections 22a, 22b, the pivot ring 30 attached to the diaphragm spring 20 is inserted to the clutch cover 10 at the outer circumference of the multiple tab portions 13a (which is not bent in the beginning), then the clinching portions 13b of the tab portions 13a are bent outwardly in a radial direction by applying pressing forces to the clinching portions 13b.

An operation of the clutch cover assembly according to the first embodiment is explained below.

When the clutch is engaged (i.e., a condition in which a clutch pedal is not pressed) the clutch pressure plate 40 is being pressed to an engine side element (i.e., toward left in Fig. 2) by an elastic load at the annular portion 21 of the diaphragm spring 20. In this condition, a pressing force of the diaphragm spring 20 to the clutch pressure plate 40 is balanced with a reaction force of the diaphragm spring 20 to the pivot ring 30, which is in contact with the fulcrum portions 23 of the diaphragm spring 20.

When the clutch pedal is pressed, a force to release the clutch is applied from the clutch release bearing to the points of effort on the diaphragm spring 20 at the lever portions 22. The reaction force generated at the pivot ring 30, which is in contact with the projections 22a, 22b on the diaphragm spring 20, works to pivot the lever portions 22 of the diaphragm spring 20 at the fulcrum points 23 of the diaphragm spring 20 and also works to pivot the annular portion 21 of the diaphragm spring 20 to a direction that the points of action on the annular portion 21 detach from the clutch pressure plate 40 so that the pressing force of the clutch pressure plate 40 to the clutch disc is released and the power transfer from the engine to the transmission is cut off.

The clutch cover assembly according to the first embodiment includes one pivot ring 30 for reducing a dimension in an axial direction and reducing a cost by including a small number of components. The clutch cover assembly according to the first embodiment also reduces the dimension in an axial direction by positioning the annular portion 21 of the diaphragm spring 20 at the clutch pressure plate 40 side of the pivot ring 30. Further, the clutch cover assembly according to the first embodiment reduces the dimension in axial direction by positioning the annular portion 21 of the diaphragm spring 20 and the clinching portions 13b of the tab portions 13a on the clutch cover 10 next to each other on an axially perpendicular plane.

The clutch cover assembly according to a second embodiment is explained referring to Figs. 5 to 8.

The clutch cover assembly according to the second embodiment is a variation of the clutch cover assembly according to the first embodiment. The clutch cover assembly according to the second embodiment is similar to the clutch cover assembly according to the first embodiment in that the second embodiment includes one pivot ring 30, in that the annular portion 61 of the diaphragm spring 60 is positioned at the clutch pressure plate 40 side of the pivot ring 30, and in that the annular portion 61 of the diaphragm spring 60 and clinching portions 53b, 53c of the tab portions 53a on the clutch cover 50 are positioned next to each other on an axially perpendicular plane, however, methods to engage the clutch cover 50 and the diaphragm spring 60 with the pivot ring 30 are different.

The clutch cover 50 is an annular member. The clutch cover 50 includes a cylinder portion 52 and an annular outer flange portion 51 that extend outward in a radial direction from one end of the cylinder portion 52, and the annular inner flange portion 53 that extends inward in radial direction from the other end of the cylinder portion 52. The outer flange portion 51 includes multiple through hole portions 51a for a purpose of retaining the clutch cover 50 to a flywheel by fixing the clutch cover 50 and the flywheel together at predetermined positions by rivets, bolts or similar fixing means. The inner flange portion 53 includes multiple tab portions 53a extending from predetermined positions of an inner periphery of the inner flange portion 53.

The tab portions 53a retain the pivot ring 30, which pivotally supports the diaphragm spring 60, to the clutch cover 50. Each of the tab portions 53a, when viewed in axial direction, is at a position that overlaps within a gap area between the lever portions 62 on the diaphragm spring 60. Each tab portion 53a is bent at its midway portion to axial direction toward the clutch pressure plate 40 (in Fig. 6), and is bent at its end portion to outward in radial direction. Each midway portion of the tab portion 53a bent to axial direction toward the clutch pressure plate 40 is positioned at an inner periphery side of the pivot ring 30 thus restraining the radial direction movement of the pivot ring 30. End portions of each tab portion 53a, which is bent outwardly in a radial direction becomes clinching portions 53b and 53c. The clinching portions 53b and 53c on each tab portion 53a are positioned where each clinching portion 53b or 53c, when clinched, does not conflict with the projections 61a on the diaphragm spring 60. In other words, clinching portions 53b or 53c are positioned at circumferentially off location to both sides (or one side) of the projection 61a. Each clinching portion 53b or 53c that clinches around the pivot ring 30 restrains the radial direction movement of the pivot ring 30 by pressing the pivot ring 30 toward a root portion of each tab portion 53a. For relieving shear stress on the pivot ring 30, one configuration of the clinching portions 53b and 53c is to form the clinching portions 53b and 53c to extend toward the opposite direction to the direction circumferentially positioned projections 61a extends to and receive the pivot ring 30 at the extended portions.

The diaphragm spring 60 is an annular elastic member that functions as a lever to provide pressure to the clutch pressure plate 40 (in Fig. 6) to make connection for the flywheel (i.e., provides pressure toward left in Fig. 6). The diaphragm spring 60 includes the multiple lever portions 62 extending inwardly in a radial direction from an inner periphery of the annular portion 61. The annular portion 61 is an annular member that functions as a coned disc spring. The annular portion 61 is slanted so that its outer periphery portion is positioned closer to the clutch pressure plate 40 (in Fig. 6) in relation to its inner periphery portion (i.e., the outer periphery portion of the annular portion 61 is positioned leftward of its inner periphery portion in Fig. 6). The outer periphery portion of the annular portion 61 is in close contact (pressure contact) with the projecting portions 41 (in Fig. 6), which are formed on the clutch pressure plate 40 (in Fig. 6), to become points of action for the diaphragm spring 60. The annular portion 61 is positioned at the clutch pressure plate 40 side (in Fig. 6) of the pivot ring 30 (i.e., the annular portion 61 is positioned leftward of the pivot ring 30 in Fig. 6). The annular portion 61 and the clinching portions 53b and 53c of the tab portion 53a are positioned next to each other on an axially perpendicular plane. Each lever portion 62 positioned circumferentially next to each other on the diaphragm spring 20 is separated from each other. Each lever portion 62 includes the fulcrum portion 63 at its root that serves as a fulcrum for the diaphragm spring 60. The fulcrum portion 63 is bent stepwisely between the annular portion 61 and the lever portions 62. The pivot ring 30 is positioned at an inner side in a radial direction of a step of the fulcrum portions 63. The annular portion 61 includes the projections 61a extending inwardly in a radial direction at locations circumferentially away from the fulcrum portions 63 to both directions. Each of the projections 61a engages to the pivot ring 30 for restraining the axial direction shifting of the pivot ring 30 at each fulcrum portion 63. When viewed in an axial direction, the projections 61a are at positions that overlap with the tab portions 53a of the clutch cover 50. Each projection 61a is at a position that does not conflict with the clinching portions 53b and 53c of each tab portion 53 on the clutch cover 50, when the clinching portions 53b and 53c are clinched. The diaphragm spring 60 pivots at the fulcrum portion 63, being supported by the pivot ring 30 at the fulcrum portions 63 and the projections 61a. Transmission side faces of the lever portions 62 at inner periphery portions (i.e., faces at right in Fig. 6) are in close contact with a clutch releasing mechanism that is movable in an axial direction (for example, a clutch release bearing). The portion where the lever portions 62 and the clutch releasing mechanism contact becomes the point of effort for the diaphragm spring 60. By pressing the point of effort on the lever portions 62 toward the clutch pressure plate 40 (in Fig. 6) (i.e., toward left in Fig. 6), the diaphragm spring 60 pivots at the fulcrum portion 63 and moves the clutch pressure plate 40 in a direction to be removed from the point of action on the annular portion 61.

The pivot ring 30 is a ring shaped (inclusive of substantially ring shaped and C-ring shaped) member. A cross section of the pivot ring 30 is a circle. The pivot ring 30 is restrained to the diaphragm spring 60 by clinching the tab portions 53b and 53c on the multiple tab portions 53a formed on the clutch cover 50 at the gap areas between the lever portions 62. The pivot ring 30 pivotally supports the diaphragm spring 60 at the fulcrum portions 63 on the diaphragm spring 60.

An example of assembling the clutch cover assembly according to the second embodiment is that after placing the pivot ring 30 on the diaphragm spring 60 in between the fulcrum portion 63 and the projections 61a, the pivot ring 30 attached to the diaphragm spring 60 is inserted to the clutch cover 50 at the outer circumference of multiple tab portions 53a (which is not bent in the beginning), then the clinching portions 53b and 53c of the tab portions 53a are bent to an outward direction in the radial direction by applying pressing forces to the clinching portions 53b and 53c.

Operations of the clutch cover assembly according to the second embodiment are explained next.

When the clutch is engaged (i.e., a condition in which a clutch pedal is not pressed) the clutch pressure plate 40 is being pressed to an engine side element (i.e., toward left in Fig. 6) by an elastic load at the annular portion 61 of the diaphragm spring 60. In this condition, a pressing force of the diaphragm spring 60 to the clutch pressure plate 40 is balanced with a reaction force of the diaphragm spring 60 to the pivot ring 30, which is in contact with the projection 61a of the diaphragm spring 60.

When the clutch pedal is pressed, a force to release clutch is applied from the clutch release bearing to the points of effort on the diaphragm spring 60 at the lever portions 62. The reaction force generated at the pivot ring 30, which is in contact with the fulcrum portion 63 on the diaphragm spring 60, works to pivot the lever portions 62 of the diaphragm spring 60 at the fulcrum portion 63 of the diaphragm spring 60 and also works to pivot the annular portion 61 of the diaphragm spring 60 to a direction where the points of action on the annular portion 61 detach from the clutch pressure plate 40 so that the pressing force of the clutch pressure plate 40 to the clutch disc is released and the power transfer from the engine to the transmission is cut off.

The clutch cover assembly according to the second embodiment is similarly effective as the clutch cover assembly according to the first embodiment.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch cover assembly, comprising:
a ring shaped pivot ring (30);
a clutch cover (10, 50) including an annular flange portion (13, 53) and a plurality of tab portions (13a, 53a) that extend from an inner periphery of the flange portion (13, 53) for retaining the pivot ring (30) at the tab portions (13a, 53a); and
a diaphragm spring (20, 60) including an annularly formed annular portion (21, 61), a plurality of lever portions (22, 62) extending inwardly in radial direction from an inner periphery of the annular portion (21, 61) at positions located between the tab portions (13a, 53a), and projections (22a, 22b, 61a), each projection (22a, 22b, 61a) engaging to the pivot ring (30) for pivoting each lever portion (22, 62) at a fulcrum portion (23, 63) on each lever portion (22, 62), wherein each of the projections (22a, 22b) extends from each lever portion (22) outwardly in a radial direction at a location that does not conflict with each of the tab portions (13a); and
the pivot ring (30) is axially positioned in between each of the fulcrum portion (23) and each of the projections (22a, 22b).

2. The clutch cover assembly according to claim 1, wherein the fulcrum portions (22) are bent stepwise; and
the pivot ring (30) is positioned at an outer side in a radial direction of a step of the fulcrum portions (23).

3. The clutch cover assembly according to claim 1 or 2, wherein each of the lever portions (22) includes two projections (22a, 22b); and
the projections (22a, 22b) on each lever portion (22) extends outward in a radial direction at circumferentially off location to both sides from the fulcrum portions (23) on each lever portion (22).

4. The clutch cover assembly, comprising:
a ring shaped pivot ring (30);
a clutch cover (10, 50) including an annular flange portion (13, 53) and a plurality of tab portions (13a, 53a) that extend from an inner periphery of the flange portion (13, 53) for retaining the pivot ring (30) at the tab portions (13a, 53a); and
a diaphragm spring (20, 60) including an annularly formed annular portion (21, 61), a plurality of lever portions (22, 62) extending inwardly in radial direction from an inner periphery of the annular portion (21, 61) at positions located between the tab portions (13a, 53a), and projections (22a, 22b, 61a), each projection (22a, 22b, 61a) engaging to the pivot ring (30) for pivoting each lever portion (22, 62) at a fulcrum portion (23, 63) on each lever portion (22, 62), wherein each projection (61a) extends inwardly in a radial direction from an inner circumference edge of the annular portion (61) between the lever portions (62) at a location that does not conflict with each tab portion (53a); and
the pivot ring (30) is axially positioned in between each fulcrum portion (63) and each projection (61a).

5. The clutch cover assembly according to claim 4, wherein the fulcrum portions (63) are bent stepwise; and
the pivot ring (30) is positioned at an inner side in a radial direction of a step of the fulcrum portions (63).

6. The clutch cover assembly according to claim 4 or 5, wherein each projection (61a) is at a position that overlaps with one of the tab portions (53a) when viewed in an axial direction; and
each clinching portion (53b, 53c) is at circumferentially off location at a position that does not conflict with each projection (61a), when clinched.

7. The clutch cover assembly according to any one of claims 4 to 6, wherein each clinching portion (53b, 53c) extends toward the opposite direction to the direction the circumferentially positioned projections (61a) extends to.

8. The clutch cover assembly according to any of claims 1 to 7, wherein the diaphragm spring (20, 60) biases a clutch pressure plate (40) at a point of action on the annular portion (21, 61) of the diaphragm spring (20, 60) in the direction for detaching the clutch pressure plate (40) from a clutch cover; and
the annular portion (21, 61) is positioned at the clutch pressure plate (40) side of the pivot ring (30).

9. The clutch cover assembly according to any of claims 1 to 8, wherein each tab portion (13a, 53a) includes at least one clinching portion (13b, 53b, 53c) bent at a middle portion in an axial direction toward the clutch pressure plate (40) and bent at an end portion outwardly in a radial direction;
the clinching portion (13b, 53b, 53c) when clinched retains the pivot ring (30) at each tab portion (13a, 53a); and
the clinching portion (13b, 53b, 53c) and the annular portion (21, 61) are positioned next to each other on an axially perpendicular plane at the clutch pressure plate (40) side of the pivot ring (30).

## Patentansprüche

1. Kupplungsdeckelbaugruppe mit:
einem ringförmigen Schwenkring (30);
einem Kupplungsdeckel (10, 50) mit einem ringförmigen Flanschteil (13, 53) und einer Mehrzahl von Zungenteilen (13a, 53a), die sich von einem inneren Umfang des Flanschteils (13, 53) aus erstrecken, zum Halten des Schwenkrings (30) an den Zungenteilen (13a, 53a); und
einer Membranfeder (20, 60) mit einem ringförmig ausgebildeten Ringteil (21, 61), einer Mehrzahl von Hebelteilen (22, 62), die sich einwärts in radialer Richtung von dem inneren Umfang des Ringteils (21, 61) an zwischen den Zungenteilen (13a, 53a) angeordneten Stellen erstrecken, und Vorsprüngen (22a, 22b, 61 a), wobei jeder Vorsprung (22a, 22b, 61 a) mit dem Schwenkring (30) in Eingriff ist, um jeden Hebelteil (22, 62) an einem Stützbereich (23, 63) an jedem Hebelteil (22, 62) zu verschwenken, wobei jeder der Vorsprünge (22a, 22b) sich von jedem Hebelteil (22) auswärts in radialer Richtung an einer Stelle erstreckt, die sich nicht mit jedem der Zungenteile (13a) stört; und
der Schwenkring (30) axial zwischen jedem der Stützbereiche (23) und jedem der Vorsprünge (22a, 22b) angeordnet ist.

2. Kupplungsdeckelbaugruppe nach Anspruch 1, wobei die Stützbereiche (22) stufenweise gebogen sind; und
der Schwenkring (30) an einer äußeren Seite in einer radialen Richtung einer Stufe der Stützbereiche (23) angeordnet ist.

3. Kupplungsdeckelbaugruppe nach Anspruch 1 oder 2, wobei jeder der Hebelteile (22) zwei Vorsprünge (22a, 22b) enthält; und
die Vorsprünge (22a, 22b) an jedem Hebelteil (22) sich auswärts in einer radialen Richtung an einer umfangsmäßig entfernten Stelle zu beiden Seiten von den Stützbereichen (23) an jedem Hebelteil (22) erstrecken.

4. Kupplungsdeckelbaugruppe mit:
einem ringförmigen Schwenkring (30);
einem Kupplungsdeckel (10, 50) mit einem ringförmigen Flanschteil (13, 53) und einer Mehrzahl von Zungenteilen (13a, 53a), die sich von einem inneren Umfang des Flanschteils (13, 53) aus erstrecken, zum Halten des Schwenkrings (30) an den Zungenteilen (13a, 53a); und
einer Membranfeder (20, 60) mit einem ringförmig ausgebildeten Ringteil (21, 61), einer Mehrzahl von Hebelteilen (22, 62), die sich einwärts in radialer Richtung von einem inneren Umfang des Ringteils (21, 61) an zwischen den Zungenteilen (13a, 53a) angeordneten Stellen erstrecken, und Vorsprüngen (22a, 22b, 61a), wobei jeder Vorsprung (22a, 22b, 6 1 a) mit dem Schwenkring (30) in Eingriff ist, um jeden Hebelteil (22, 62) an einem Stützbereich (23, 63) an jedem Hebelteil (22, 62) zu verschwenken, wobei jeder Vorsprung (61a) sich einwärts in einer radialen Richtung von einem inneren Umfangsrand des Ringteils (61) zwischen den Hebelteilen (62) an einer Stelle erstreckt, die sich nicht mit einem Zungenteil (53a) stört; und
der Schwenkring (30) axial zwischen jedem Stützbereich (63) und jedem Vorsprung (61 a) angeordnet ist.

5. Kupplungsdeckelbaugruppe nach Anspruch 4, wobei die Stützbereiche (63) stufenweise gebogen sind; und
der Schwenkring (30) an einer Innenseite in einer radialen Richtung einer Stufe der Stützbereiche (63) angeordnet ist.

6. Kupplungsdeckelbaugruppe nach Anspruch 4 oder 5, wobei jeder Vorsprung (61a) an einer Stelle ist, die mit einem der Zungenteile (53a), gesehen in axialer Richtung, überlappt; und
jeder Klammerbereich (53b, 53c) an einer umfangsmäßig entfernten Stelle an einer Stelle ist, die im geklammerten Zustand sich nicht mit jedem Vorsprung (61a) stört.

7. Kupplungsdeckelbaugruppe nach einem der Ansprüche 4 bis 6, wobei jeder Klammerbereich (53b, 53c) sich in entgegengesetzter Richtung zu der Richtung erstreckt, in der sich die umfangsmäßig angeordneten Vorsprünge (61a) erstrecken.

8. Kupplungsdeckelbaugruppe nach einem der Ansprüche 1 bis 7, wobei die Membranfeder (20, 60) eine Kupplungsdruckplatte (40) an einer Wirkstelle an dem Ringteil (21, 61) der Membranfeder (20, 60) in der Richtung zum Lösen der Kupplungsdruckplatte (40) von einem Kupplungsdeckel vorspannt; und
der Ringteil (21, 61) an der der Kupplungsdruckplatte (40) zugewandten Seite des Schwenkrings (30) angeordnet ist.

9. Kupplungsdeckelbaugruppe nach einem der Ansprüche 1 bis 8, wobei jeder Zungenteil (13a, 53a) wenigstens einen Klammerbereich (13b, 53b, 53c) enthält, der in einem mittleren Bereich in einer axialen Richtung in Richtung auf die Kupplungsdruckplatte (40) gebogen ist und an einem Endbereich auswärts in einer radialen Richtung gebogen ist;
der Klammerbereich (13b, 53b, 53c) im geklammerten Zustand den Schwenkring (30) an jedem Zungenteil (13a, 53a) hält; und
der Klammerbereich (13b, 53b, 53c) und der Ringteil (21, 61) nächst zueinander an einer axial senkrechten Ebene an der der Kupplungsdruckplatte (40) zugewandten Seite des Schwenkrings (30) angeordnet sind.

## Revendications

1. Assemblage de couvercle d'embrayage, comprenant :
un anneau de pivot (30) de forme annulaire ;
un couvercle d'embrayage (10, 50) comprenant une partie de flanc annulaire (13, 53) et une pluralité de portions de pattes (13a, 53a) qui s'étendent à partir d'une périphérie interne de la partie de flanc (13, 53) pour retenir l'anneau de pivot (30) sur les portions de pattes (13a, 53a) ;
et un ressort à diaphragme (20, 60) comprenant un partie annulaire (21, 61) de forme annulaire, une pluralité de parties de levier (22, 62) s'étendant vers l'intérieur dans une direction radiale à partir d'une périphérie interne de la partie annulaire (21, 61) à des positions localisées entre les portions de pattes (13a, 53a), et des projections (22a, 22b, 61a), chaque projection (22a, 22b, 61a) s'engageant avec l'anneau de pivot (30) pour faire pivoter chaque partie de levier (22, 62) sur une partie d'appui (23, 63) sur chaque partie de levier (22, 62), dans lequel chacune des projections (22a, 22b) s'étend à partir de chaque partie de levier (22) vers l'extérieur dans une direction radiale à un endroit qui n'est pas en conflit avec chacune des portions de pattes (1 3a) ; et
l'anneau de pivot (30) est positionné axialement entre chacune des parties d'appui (23) et chacune des projections (22a, 22b).

2. Assemblage de couvercle d'embrayage selon la revendication 1, dans lequel les parties d'appui (23) sont courbées par pallier ; et l'anneau de pivot (30) est positionné sur un coté externe dans une direction radiale d'un pas des parties d'appui (23).

3. Assemblage de couvercle d'embrayage selon la revendication 1 ou 2, dans lequel chacune des parties de levier (22) comprend deux projections (22a, 22b) ; et les projections (22a, 22b) sur chaque partie de levier (22) s'étendent vers l'extérieur dans une direction radiale à un endroit circonférentiellement en dehors par support aux deux côtés à partir des parties d'appui (23) sur chaque partie de levier (22).

4. L'assemblage de couvercle d'embrayage, comprenant :
un anneau de pivot (30) de forme annulaire ;
un couvercle d'embrayage (10, 50) comprenant une partie de flanc annulaire (13, 53) et une pluralité de portions de pattes (13a, 53a) qui s'étendent à partir d'une périphérie interne de la partie de flanc (13, 53) pour retenir l'anneau de pivot (30) sur les portions de pattes (13a, 53a) ;
et un ressort à diaphragme (20, 60) comprenant un partie annulaire (21, 61) de forme annulaire, une pluralité de parties de levier (22, 62) s'étendant vers l'intérieur dans une direction radiale à partir d'une périphérie interne de la partie annulaire (21, 61) à des positions localisées entre les portions de pattes (13a, 53a), et des projections (22a, 22b, 61a), chaque projection (22a, 22b, 61a) s'engageant avec l'anneau de pivot (30) pour faire pivoter chaque partie de levier (22, 62) sur une partie d'appui (23, 63) sur chaque partie de levier (22, 62), dans lequel chaque projection (61a) s'étend vers l'intérieur dans une direction radiale à partir d'un bord circonférentiel interne de la partie annulaire (61) entre les parties de levier (62) à un endroit qui n'est pas en conflit avec chaque portion de patte (53a) ; et
l'anneau de pivot (30) est positionné axialement entre chaque partie d'appui (63) et chaque projection (61a).

5. Assemblage de couvercle d'embrayage selon la revendication 4, dans lequel les parties d'appui (63) sont courbées par pallier ; et l'anneau de pivot (30) est positionné sur un coté interne dans une direction radiale d'un pas des parties d'appui (63).

6. Assemblage de couvercle d'embrayage selon la revendication 4 ou 5, dans lequel chaque projection (61a) est dans une position qui recouvre celle d'une des portions de pattes (53a) lorsque considéré dans une direction axiale ; et
chaque partie de serrage (53b, 53c) est à un endroit circonférentiellement en dehors par rapport à une position qui n'est pas en conflit avec chaque projection (61 a), une fois serrées.

7. Assemblage de couvercle d'embrayage selon l'une quelconque des revendications 4 à 6, dans lequel chaque partie de serrage (53b, 53c) s'étend vers la direction opposé à la direction vers laquelle les projections (61a) positionnées de manière circonférentielle s'étendent.

8. Assemblage de couvercle d'embrayage selon l'une quelconque des revendications 1 à 7, dans lequel le ressort à diaphragme (20, 60) biaise un plateau de pression d'embrayage (40) à un point d'action sur la partie annulaire (21, 61) du ressort à diaphragme (20, 60) dans la direction de détachement du plateau de pression d'embrayage (40) à partir d'un couvercle d'embrayage ; et
la partie annulaire (21, 61) est positionnée au côté du plateau de pression d'embrayage (40) de l'anneau de pivot (30).

9. Assemblage de couvercle d'embrayage selon l'une quelconque des revendications 1 à 8, dans lequel chaque portion de patte (13a, 53a) comprend au moins une partie de serrage (13b, 53b, 53c) courbée à une partie médiane dans une direction axiale en direction du plateau de pression d'embrayage (40) et courbée à une partie d'extrémité vers l'extérieur dans une direction radiale ;
la partie de serrage (13b, 53b, 53c) une fois serrée retient l'anneau de pivot (30) à chaque portion de patte (13a, 53a) ; et
la partie de serrage (13b, 53b, 53c) et la partie annulaire (21, 61) sont positionnées à côté l'une de l'autre le long d'un plan axial perpendiculaire au côté du plateau de pression d'embrayage (40) de l'anneau de pivot (30).
